# EUROPÄISCHE PATENTSCHRIFT

(11) **EP 3 261 823 B1**
(45) Veröffentlichungstag und Bekanntmachung des Hinweises auf die Patenterteilung: **15.05.2019**
(21) Anmeldenummer: 16705425.3
(22) Anmeldetag: 15.02.2016
(51) Int. Cl.: B29C 70/46, B29C 70/50

(54) **PROZESSANORDNUNG SOWIE VERFAHREN ZUR HERSTELLUNG EINES FASERVERSTÄRKTEN KUNSTSTOFFBAUTEILS**
PROCESSING ARRANGEMENT AND A METHOD FOR PRODUCING A FIBRE-REINFORCED PLASTIC COMPONENT
SYSTÈME DE TRAITEMENT ET PROCÉDÉ DE FABRICATION D'UN ÉLÉMENT EN MATIÈRE PLASTIQUE RENFORCÉE DE FIBRES

(30) Priorität: 23.02.2015 DE 102015002106
(43) Veröffentlichungstag der Anmeldung: 03.01.2018
(73) Patentinhaber: Volkswagen Aktiengesellschaft, 38436 Wolfsburg (DE); BASF SE, 67056 Ludwigshafen am Rhein (DE)
(72) Erfinder: MERTENS, Thomas, 38468 Ehra-Lessien (DE); EHLEBEN, Max, 38126 Braunschweig (DE); KUNZE, Christine, 38527 Meine (DE); TÄGER, Olaf, 38126 Braunschweig (DE); BITTERLICH, Maurice, 38165 Lehre (DE); ZEUNER, Katja, 38104 Braunschweig (DE); DESBOIS, Philippe, 68535 Edingen (DE); WOLLNY, Andreas, 67251 Freinsheim (DE)
(74) Vertreter: Bierschneider, Walter
(86) Internationale Anmeldenummer: PCT/EP2016/000254
(87) Internationale Veröffentlichungsnummer: WO 2016/134830

(56) Entgegenhaltungen:
- EP-A1- 0 443 051
- WO-A1-2011/056293
- WO-A1-2012/116947

## Beschreibung

Die Erfindung betrifft eine Prozessanordnung zur Herstellung eines faserverstärkten Kunststoffbauteils nach dem Oberbegriff des Patentanspruches 1 sowie ein Verfahren zur Herstellung eines solchen Kunststoffbauteils nach dem Oberbegriff des Patentanspruches 9.

Die Herstellung von faserverstärkten Kunststoffbauteilen kann mit Hilfe von textilen Halbzeugen, sogenannten Prepregs, erfolgen. Bei reaktiven Prepregs ist ein textiles Fasermaterial mit einem reaktiven, das heißt noch nicht polymerisierten thermoplastischen Matrixmaterial unterhalb einer Polymerisations-Starttemperatur vorimprägniert. Zur Formgebung des faserverstärkten Kunststoffbauteils werden die Prepregs in einem Ablegevorgang zu einem Lagenpaket übereinandergestapelt und wird dieser einem Tiefzieh- oder Pressverfahren unterworfen.

Aus der WO 2012/116947 A1 ist ein gattungsgemäßes Verfahren zur Herstellung von reaktiven Prepregs, das heißt von endlosfaserverstärkten, flächigen Halbzeugen mit Polyamidmatrix bekannt. In dem Verfahren werden zunächst textile Strukturen mit einer flüssigen Ausgangskomponente der Polyamidmatrix, das heißt geschmolzenes Lactam einschließlich zugegebener Katalysatoren und/oder Aktivatoren, vorimprägniert, und zwar in einem kontinuierlichen Prozess. Nach erfolgter Imprägnierung wird die vorimprägnierte textile Endlos-Struktur in einer Schneidstation zu faserverstärkten flächigen Halbzeugen konfektioniert und in einer Stapelstation übereinander gestapelt. Im weiteren Prozessverlauf werden die vorimprägnierten textilen Halbzeuge zu einer Assemblierstation transportiert, in der die textilen Halbzeuge in einem Ablegevorgang übereinandergelegt und entsprechend der Endkontur des herzustellenden Bauteils zugeschnitten werden. Das so gebildete Lagenpaket wird anschließend in eine Werkzeugform eingelegt. Dann erfolgt die Formgebung, und zwar bei einer Temperatur oberhalb der Polymerisations-Starttemperatur in einem Press- oder Tiefziehvorgang. Auf diese Weise polymerisiert das vorimprägnierte Lactam zu einem Polyamid. Durch das gleichzeitige Tiefziehen/Pressen wird das faserverstärkte, flächige Halbzeug in die beabsichtigte Form des herzustellenden Bauteils gebracht.

Anschließend kann in einer Nachbehandlungsstation ein Endbeschnitt des fertiggestellten Kunststoffbauteils erfolgen, und zwar unter Bildung von Endbeschnitt-Resten, die aus einem Verbund aus Fasern und dem polymerisierten Matrixmaterial bestehen. Die Endbeschnitt-Reste können einer Recyclingstation zugeführt werden und dort zu einem Recyclat für Anwendungen in einem Spritzguss- oder Pressprozess weiterverarbeitet werden, wie es zum Beispiel in der EP 2 666 805 B1 angedeutet ist. Demzufolge können Bauteile auf Basis einer thermoplastischen Matrix durch ein einfaches Zerkleinern und Extrudieren neuen Anwendungen im Spritzgussbereich zugeführt werden. Dabei besteht der grundlegende Vorteil von Faserverbundwerkstoffen auf Basis einer thermoplastischen Matrix in der hervorragenden Recyclierungseigenschaft. Durch ein einfaches Aufschmelzen und Regranulieren vermischen sich die Fasern und die Matrix homogen. Das so recyclierte Granulat kann erneut als ein hochwertiger Rohstoff für die verschiedensten Anwendungen eingesetzt werden.

Bei der oben skizzierten Prozesskette besteht die Problematik darin, dass - abgesehen von dem erwähnten Endbeschnitt-Rest - zusätzlich auch zu vorgelagerten Prozesszeitpunkten Randbeschnitt-Reste (aus der Konfektionierung der Faserhalbzeuge) und Assemblierbeschnitt-Reste entstehen. Die Randbeschnitt-Reste und die Assemblierbeschnitt-Reste sind - im Unterschied zum Endbeschnitt-Rest - noch nicht polymerisiert und können daher im oben angegebenen Recyclingprozess nicht weiterverarbeitet werden. Die Randbeschnitt- und Assemblierbeschnitt-Reste werden daher als nicht recyclingfähiger Materialausschuss aus der Prozesskette herausgeführt.

Ferner ist aus der EP 0 443 051 A1 bekannt, Beschnittreste zur Herstellung einer duroplastischen Pressmasse aus Glasfaser-Polyester-Verbundwerkstoff zu verwenden. Die Beschnittreste bestehen dabei aus bereits ausgehärtetem Matrixmaterial. Gemäß der WO 2011/056293 A1 werden faserverstärkte Späne zur Herstellung von Verbundbauteilen verwendet. Die Späne werden dabei beispielsweise von einem faserverstärkten vorimprägnierten Werkstoff abgeschnitten.

Die Aufgabe der Erfindung besteht darin, eine Prozessanordnung sowie ein Verfahren zur Herstellung eines faserverstärkten Kunststoffbauteils bereitzustellen, das ein im Vergleich zum Stand der Technik verbessertes Recyclingkonzept aufweist.

Die Aufgabe der Erfindung ist durch die Merkmale des Patentanspruches 1 oder des Patentanspruches 9 gelöst. Bevorzugte Weiterbildungen der Erfindung sind in den abhängigen Ansprüchen offenbart.

Gemäß dem kennzeichnenden Teil des Patentanspruches 1 ist der Recyclingstation zusätzlich eine Aufbereitungsstation zugeordnet. Der Aufbereitungsstation sind Beschnitt-Reste aus einem Verbund aus Fasern von noch nicht polymerisiertem, das heißt reaktivem thermoplastischem Matrixmaterial zuführbar. In der Aufbereitungsstation wird zunächst das reaktive thermoplastische Matrixmaterial polymerisiert, anschließend wird der so gebildete Verbund aus Fasern und polymerisiertem Matrixmaterial der Recyclingstation zugeführt. In der Recyclingstation wird das von der Aufbereitungsstation zugeführte Verbundmaterial zusammen mit den Endbeschnitt-Resten zu dem Recyclat weiterverarbeitet, das für Anwendungen in Spritzguss- oder Pressprozessen geeignet ist.

Im Hinblick auf eine einwandfreie Polymerisation in der Aufbereitungsstation ist es von Relevanz, dass die noch nicht polymerisierten Beschnitt-Reste nicht in Kontakt mit der Umgebung gelangen, das heißt mit der Luftfeuchtigkeit, dem Sauerstoff, der UV-Strahlung oder dergleichen, reagiert, wodurch deren Verarbeitbarkeit, insbesondere die Polymerisation, beeinträchtigt wird. Um eine solche nachteilige Reaktion mit der Umgebung zu vermeiden, können die Beschnitt-Reste während der Lagerung und des Transports bis zu ihrer Verarbeitung in der Aufbereitungsstation getrocknet werden und/oder unter luft-, licht- und/oder feuchtigkeitsdichter Abschirmung gelagert werden. Die Polymerisation der Beschnitt-Reste erfolgt in einem Ofen, zum Beispiel in einem Durchlaufofen.

In einer fertigungstechnischen Umsetzung kann in der Fertigungsstation in einem kontinuierlichen Prozess zumindest eine Endlosbahn aus einer textilen Struktur mit einer flüssigen Ausgangskomponente des reaktiven, thermoplastischen Matrixmaterials vorimprägniert werden. Nach erfolgter Imprägnierung wird ein Randbeschnitt durchgeführt, bei dem die vorimprägnierte Endlos-Struktur in einer Schneidstation zu den endlosfaserverstärkten textilen Faserhalbzeugen (reaktive Prepregs) mit reaktivem, das heißt noch nicht polymerisiertem, thermoplastischen Matrixmaterial konfektioniert werden. Die Konfektionierung erfolgt unter Bildung von Randbeschnitt-Resten, die aus einem Verbund aus Fasern und reaktivem thermoplastischen Matrixmaterial bestehen. In den Randbeschnitt-Resten sind die Fasern fertigungstechnisch bedingt nicht vollständig mit dem Matrixmaterial benetzt. Die Randbeschnitt-Reste können zum Teil sogar komplett ohne Matrixmaterial vorliegen. Entsprechend ist der Faseranteil in den Randbeschnitt-Resten sehr hoch.

Im weiteren Prozessverlauf werden die reaktiven Prepregs in einer Stapelstation übereinandergestapelt und gelagert sowie bei Bedarf zu einer Assemblierstation transportiert. In der Assemblierstation werden die Prepregs exemplarisch zunächst in einem Ablegevorgang zu einem Lagenpaket übereinandergeschichtet. Anschließend kann ein Assemblierbeschnitt erfolgen, bei dem das Lagenpaket entsprechend einer Endkontur des faserverstärkten Kunststoffbauteils zugeschnitten wird. Dies erfolgt unter Bildung von Assemblierbeschnitt-Resten, bestehend aus einem Verbund aus Fasern und reaktivem thermoplastischem Matrixmaterial. Im Unterschied zu dem Randbeschnitt-Resten sind die Assemblierbeschnitt-Reste vollständig von Matrixmaterial umgeben, das heißt vollimprägniert, so dass der Faseranteil vergleichsweise groß ist und dem Faseranteil eines fertiggestellten faserverstärkten Kunststoffbauteils entspricht. Alternativ dazu kann auch zuerst der Assemblierbeschnitt und daran anschließend der Ablegevorgang erfolgen.

In einer Ausführungsvariante können die reaktiven Prepregs mit einem äußeren Bauteilrand ausgebildet sein, der einen für den Press- und/oder Tiefziehvorgang erforderlichen Überstand bildet. Dieser ist nach erfolgtem Press- und/oder Tiefziehvorgang funktionslos und kann daher in der Nachbehandlungsstation vom fertiggestellten Kunststoffbauteil entfernt werden, und zwar unter Bildung von Endbeschnitt-Resten. Zugleich können in der Nachbehandlungsstation auch Durchbrüche, Ausnehmungen oder dergleichen in das fertiggestellte Kunststoffbauteil eingearbeitet werden, wodurch ebenfalls Endbeschnitt-Reste entstehen, die der Recyclingstation zuführbar sind. Der vom Kunststoffbauteil entfernte Überstand kann einen Faseranteil aufweisen, der mit dem Faseranteil des fertiggestellten Kunststoffbauteils identisch ist. Gegebenenfalls kann der entfernte Überstand auch einen geringeren Faseranteil aufweisen, und zwar aufgrund eines Überlaufs von überschüssigem Matrixmaterial bei der Formgebung des Kunststoffbauteils im Press-/Tiefziehwerkzeug.

In Abhängigkeit vom erforderlichen Faservolumengehalt des in der Recyclingstation herzustellenden Recyclats kann den in die Recyclingstation geführten Beschnitt-Resten ein reines polymerisiertes Matrixmaterial zugesetzt werden. Zudem kann der Aufbereitungsstation und/oder der Recyclingstation eine Zerkleinerungseinheit, zum Beispiel eine Schneidmühle, zugeordnet werden, in der die zu dem Recyclat zusammenführbaren Beschnittreste zerkleinerbar sind. Bevorzugt können die Randbeschnitt-Reste sowie die Assemblierbeschnitt-Reste bereits vor der Schneidmühlenverarbeitung polymerisiert werden. Der Endbeschnitt-Rest kann je nach Anforderung mit dem Assemblierbeschnitt-Rest und/oder mit dem Randbeschnitt-Rest jeweils vor oder nach der Schneidmühle in unterschiedlichen Gewichtsverhältnissen miteinander gemischt und erst anschließend der Recyclingstation zugeführt werden. Darin erfolgt dann die Weiterverarbeitung der kurz- oder langfaserverstärkten, polymerisierten Beschnitt-Resten.

Die oben angegebenen, in unterschiedlichen Prozessstationen anfallenden Beschnitt-Reste liegen zum Zeitpunkt des Zuschnittes in unterschiedlichen Zuständen bezüglich des Polymerisations-Grades und des Faservolumengehaltes vor.

Als reaktives thermoplastisches Matrixmaterial wird vorzugsweise Caprolactam (sogenanntes Guss-PA) verwendet. Alternative reaktive thermoplastische Matrixsysteme können außer Caprolactam auch zum Beispiel Laurinlactam und zyklisches Buthylentherephtalat, etc. sein. Als Fasermaterial sind alle möglichen Fasern denkbar. Vorzugsweise werden Fasern aus Glas, Kohlenstoff (sogenannte Carbonfasern), Basalt, Aramid oder eine Kombination davon verwendet. Diese liegen in unterschiedlichster Anordnung, wie zum Beispiel Gewebe, Gelege oder undirektional, vor. Die Polymerisation erfolgt bei Caprolactam mittels einer Reaktionstemperatur von ca. 150°C, bei der aus dem Caprolactam das Polyamid (PA6) entsteht. Für andere reaktive Materialien, wie zum Beispiel Laurinlactam zu PA12 oder CBT zu PBT sind dem jeweiligen Material angepasste Temperaturen zu wählen.

Die vorstehend erläuterten und/oder in den Unteransprüchen wiedergegebenen vorteilhaften Aus- und/oder Weiterbildungen der Erfindung können - außer zum Beispiel eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend von Zeichnungen näher erläutert.

Es zeigen:
- Fig. 1 bis 4: jeweils Prozessstationen zur Herstellung des faserverstärkten Kunststoffbauteils; und
- Fig. 5: ein Blockschaltdiagramm der Prozesskette einschließlich einer Recyclingstation und einer zugeordneten Aufbereitungsstation.

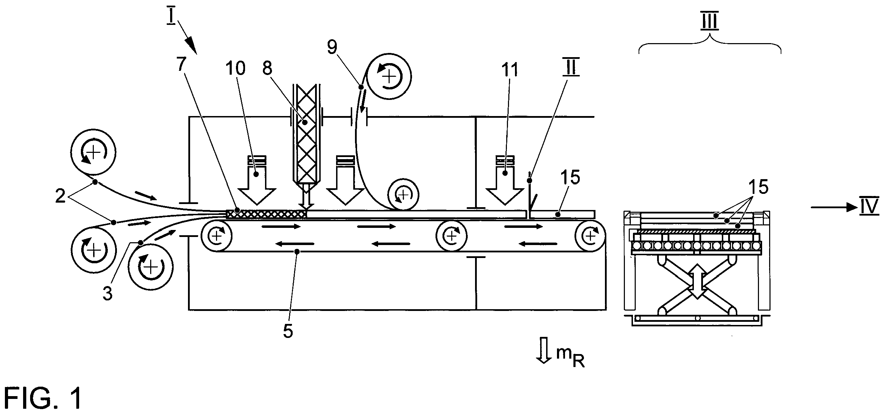

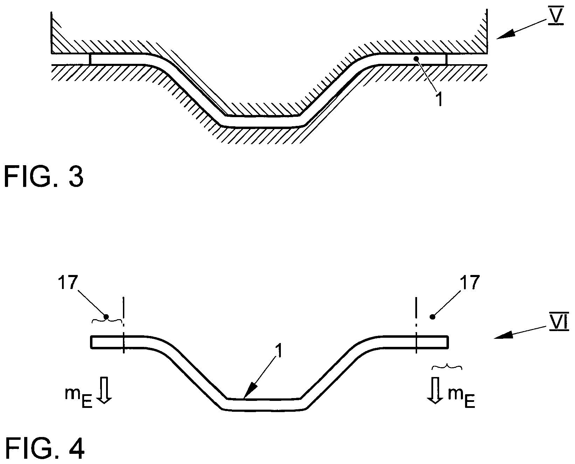

In den Fig. 1 bis 4 sind die Prozessstationen I bis VI zur Herstellung eines faserverstärkten Kunststoffbauteils 1 (Fig. 3 und 4) insoweit dargestellt, als es für das Verständnis der Erfindung erforderlich ist. Demzufolge werden in einer Fertigungsstation I zunächst exemplarisch zwei Faserlagen 2 in einem kontinuierlichen Prozess unter Zwischenlage einer ersten Folie 3 aus zum Beispiel Polyamid oder einem anderen geeigneten Material auf ein Endlostransportband 5 gebracht. Die so gebildete textile Lagenstruktur 7 wird mit einer Ausgangskomponente 8 eines reaktiven thermoplastischen Matrixmaterials, etwa Lactam, durchtränkt, und zwar unter Wärmebeaufschlagung 10 bei einer Temperatur unterhalb der Starttemperatur für eine Polymerisation der Ausgangskomponente des reaktiven thermoplastischen Matrixmaterials.

Anschließend wird im weiteren Prozessverlauf noch eine zweite Folie 9 appliziert und die textile Lagenstruktur 7 in einer Kühleinheit 11 abgekühlt (das heißt konsolidiert) sowie in einer nachfolgenden Schneidstation II zu einzelnen vorimprägnierten, textilen Faserhalbzeugen 15 konfektioniert. In der Schneidstation II erfolgt ein Randbeschnitt, bei dem die vorimprägnierte Endlos-Struktur 7 zu den endlosfaserverstärkten textilen Faserhalbzeugen 15 (nachfolgend auch als Prepregs bezeichnet) zugeschnitten wird. In der Fig. 1 ist lediglich der Abläng-Schnitt angedeutet. Der Randbeschnitt erfolgt in der Fig. 1 rechtwinklig zum Abläng-Schnitt in der Zeichenblattebene.

Dabei entsteht ein Randbeschnitt-Rest m_{R}, der aus einem Verbund aus Fasern und reaktivem (das heißt noch nicht polymerisiertem) thermoplastischem Matrixmaterial besteht. Der Randbeschnitt-Rest m_{R} wird als Materialausschuss aus der Prozesskette abgeführt. Im Randbeschnitt-Rest m_{R} sind die Fasern nicht vollständig mit dem reaktivem Matrixmaterial benetzt oder liegen diese gänzlich ohne Matrixmaterial vor, wodurch der Randbeschnitt-Rest m_{R} einen sehr hohen Faseranteil aufweist.

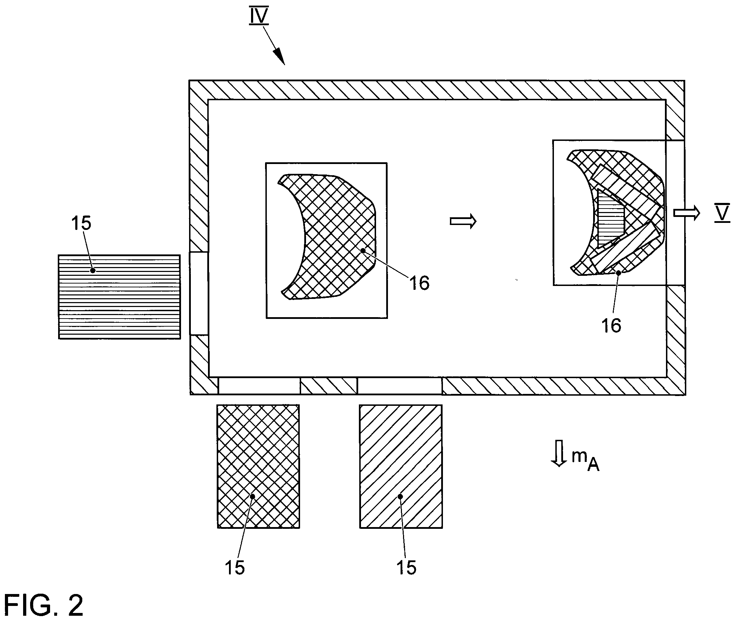

Die konfektionierten textilen Faserhalbzeuge 15 werden in einer folgenden Stapelstation III übereinander gestapelt und gelagert. Je nach Bedarf werden die übereinander gestapelten Faserhalbzeuge 15 zu einer prozesstechnisch nachgeschalteten Assemblierstation IV übertragen, die in der Fig. 2 angedeutet ist. In der Assemblierstation IV werden die vorimprägnierten, textilen Faserhalbzeuge 15 zugeschnitten und zu einem Lagenpaket 16 (Fig. 2) übereinandergeschichtet abgelegt. Zudem werden die zum Lagenpaket 16 übereinandergeschichteten Prepregs 15 entsprechend den Lasterfordernissen des am fertiggestellten Kunststoffbauteil 1 zugeschnitten. Daraus ergibt sich ein weiterer Materialausschuss, der als ein Assemblierbeschnitt-Rest m_{A} aus der Prozesskette geführt wird. Der Assemblierbeschnitt-Rest m_{A} besteht aus einem Verbund aus Fasern und reaktivem thermoplastischem Matrixmaterial. Im Unterschied zum Randbeschnitt-Rest m_{R} sind im Assemblierbeschnitt-Rest m_{A} die Fasern vollständig von Matrixmaterial umgeben, das heißt vollimprägniert. Der Faseranteil des Assemblierbeschnitt-Rests m_{A} ist daher höher als beim Randbeschnitt-Rest m_{R} und im Wesentlichen identisch mit dem Faseranteil des fertiggestellten Kunststoffbauteils 1.

Im weiteren Prozessverlauf wird das Lagenpaket 16 zu der, in der Fig. 3 grob schematischen angedeuteten Press- und/oder Tiefziehstation V übertragen, in der das Lagenpaket 16 auf eine Temperatur oberhalb der Polymerisationstemperatur erwärmt wird und gleichzeitig in die Form des herzustellenden Kunststoffbauteils 1 tiefgezogen/gepresst wird. In einer prozesstechnisch nachgelagerten Nachbehandlungsstation VI (Fig. 4) wird am Kunststoffbauteil 1 ein Endbeschnitt durchgeführt, bei dem beispielhaft ein für den Tiefziehvorgang erforderlicher äußerer Bauteilrand 17 vom Kunststoffbauteil 1 entfernt wird, und zwar unter Bildung eines Endbeschnitt-Rests m_{E}, der aus einem Verbund aus Fasern und polymerisiertem Matrixmaterial besteht.

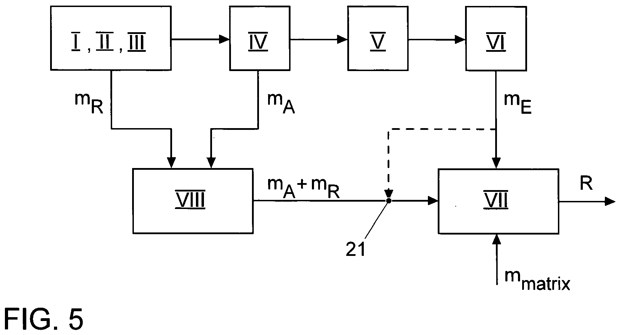

In der Fig. 5 ist der Prozesskette I bis VI zur Herstellung des Kunststoffbauteils 1 eine Recyclingstation VII nachgeschaltet, in die die Endbeschnitt-Reste m_{E} geführt werden. In der Recyclingstation VII kann gegebenenfalls eine Schneidmühle angeordnet sein, die die Endbeschnitt-Reste m_{E} zerkleinert. In der Recyclingstation VII werden die Endbeschnitt-Reste m_{E} zu einem Recyclat R weiterverarbeitet, das für Anwendung in einem Spritzguss- oder Pressprozess geeignet ist.

Wie aus der Fig. 5 weiter hervorgeht, ist der Recyclingstation VII eine Aufbereitungsstation VIII zugeordnet. Der Aufbereitungsstation VIII sind die Randbeschnitt-Reste m_{R} und die Assemblierbeschnitt-Reste m_{A} zuführbar. Beide Beschnitt-Reste m_{R}, m_{A} bestehen aus einem Verbund aus Fasern mit reaktivem (das heißt noch nicht polymerisiertem) thermoplastischem Matrixmaterial und sind daher nicht unmittelbar in der Recyclingstation VII zu dem Recyclat R verarbeitbar.

In der Aufbereitungsstation VIII wird das reaktive thermoplastische Matrixmaterial der beiden Beschnitt-Reste m_{R}, m_{A} polymerisiert. Der so gebildete Verbund aus Fasern und polymerisiertem Matrixmaterial wird dann in der Recyclingstation VII mit den Endbeschnitt-Resten m_{E} zusammengeführt und dort weiter verarbeitet.

Alternativ und/oder zusätzlich kann auch die Aufbereitungsstation VIII eine Schneidmühle aufweisen, in der die Beschnitt-Reste m_{R} und m_{A} zerkleinert werden. Bevorzugt ist es, wenn die Schneidmühlenverarbeitung der Randbeschnitt- und der Assemblierbeschnitt-Reste m_{R}, m_{A} erst erfolgt, nachdem diese polymerisiert sind.

Wie in der Fig. 5 mit gestrichelter Linie angedeutet ist, kann in einer alternativen Ausführungsvariante der Endbeschnitt-Rest m_{E} an einer, der Recyclingstation VII vorgelagerten Koppelstelle 21 mit den polymerisierten Beschnitt-Resten m_{A}, m_{R} zusammengeführt und dann in die Recyclingstation VII weitergeleitet werden. Zudem können je nach benötigtem Faservolumengehalt des Recyclats R den Beschnitt-Resten m_{R}, m_{A}, m_{E} jeweils noch polymerisiertes Matrixmaterial zugesetzt werden, um gegebenenfalls den Faseranteil im Recyclat R zu reduzieren.

Dem in der Recyclingstation VII hergestellten Recyclat R können zusätzlich Beimischungen beigefügt werden. Das Recyclat R kann im weiteren Verfahrensverlauf plastifiziert sowie einem Schneckenextruder zugeführt werden und anschließend im Spritzguss- oder Pressprozess verarbeitet werden.

## Patentansprüche

1. Prozessanordnung zur Herstellung eines faserverstärkten Kunststoffbauteils (1), mit einer Fertigungs- und Assemblierstation (I, IV) zur Bereitstellung zumindest eines endlosfaserverstärkten textilen Faserhalbzeugs (15) mit reaktivem thermoplastischen Matrixmaterial, und zwar unter Bildung von Beschnitt-Resten (m_{R}, m_{A}) aus einem Verbund aus Fasern und dem reaktiven thermoplastischen Matrixmaterial, mit einer Press- und/oder Tiefziehstation (V), in der das endlosfaserverstärkte textile Faserhalbzeug (15) mit reaktivem thermoplastischem Matrixmaterial auf eine Temperatur oberhalb der Polymerisationstemperatur erwärmt wird und gleichzeitig in die Form des herzustellenden Kunststoffbauteils (1) pressbar und/oder tiefziehbar ist, **gekennzeichnet durch** eine Nachbehandlungsstation (VI), in der ein Endbeschnitt des Kunststoffbauteils (1) erfolgt, und zwar unter Bildung von Endbeschnitt-Resten (m_{E}) aus einem Verbund aus Fasern und dem polymerisierten Matrixmaterial, und mit einer Recyclingstation (VII), in der die Endbeschnitt-Reste (m_{E}) aus dem Verbund aus Fasern und dem polymerisierten Matrixmaterial zu einem Recyclat (R) für Anwendungen in einem Spritzguss- oder Pressprozess weiterverarbeitbar sind, wobei der Recyclingstation (VII) eine Aufbereitungsstation (VIII) zugeordnet ist, der die Beschnitt-Reste (m_{R}, m_{A}) aus dem Verbund aus Fasern und reaktivem thermoplastischem Matrixmaterial zuführbar sind, dass in der Aufbereitungsstation (VIII) das reaktive thermoplastische Matrixmaterial polymerisierbar ist, und dass der so gebildete Verbund aus Fasern und polymerisiertem Matrixmaterial der Recyclingstation (VII) zuführbar ist.

2. Prozessanordnung nach Anspruch 1, **dadurch gekennzeichnet, dass** in der Fertigungsstation (I) in einem kontinuierlichen Prozess zumindest eine Endlosbahn aus einer textilen Struktur (7) mit einer flüssigen Ausgangskomponente (8) des reaktiven thermoplastischen Matrixmaterials vorimprägnierbar ist, und dass eine Schneidstation (II) bereitgestellt ist, in der nach erfolgter Imprägnierung ein Randbeschnitt erfolgt, bei dem die gebildete vorimprägnierte Endlos-Struktur (7) zu den endlosfaserverstärkten textilen Faserhalbzeugen (15) mit reaktivem thermoplastischem Matrixmaterial konfektionierbar sind, und zwar unter Bildung eines Randbeschnitt-Rests (m_{R}), der aus dem Verbund aus Fasern und reaktivem thermoplastischem Matrixmaterial besteht.

3. Prozessanordnung nach Anspruch 1, **dadurch gekennzeichnet, dass** in der Assemblierstation (IV) die endlosfaserverstärkten textilen Faserhalbzeuge (15) in einem Ablegevorgang zu einem Lagenpaket (16) übereinanderschichtbar sind und/oder ein Assemblierbeschnitt erfolgt, bei dem das Faserhalbzeug (15) entsprechend einer Endkontur des faserverstärkten Kunststoffbauteils (1) zuschneidbar ist, und zwar unter Bildung eines Assemblierbeschnitt-Rests (m_{A}), der aus dem Verbund aus Fasern und reaktivem thermoplastischem Matrixmaterial besteht.

4. Prozessanordnung nach Anspruch 1, **dadurch gekennzeichnet, dass** das endlosfaserverstärkte textile Faserhalbzeug (15) mit einem für den Press- und/oder Tiefziehvorgang erforderlichen äußeren Bauteilrand (17) ausgebildet ist, der einen Überstand bildet, der in der Nachbehandlungsstation (VI) vom Kunststoffbauteil (1) entfernbar ist, und zwar unter Bildung des Endbeschnitt-Rests (m_{E}).

5. Prozessanordnung nach Anspruch 1, **dadurch gekennzeichnet, dass** in der Nachbehandlungsstation (VI) in das Kunststoffbauteil (1) Durchbrüche, Ausnehmungen oder dergleichen einarbeitbar sind, und zwar unter Bildung des Endbeschnitt-Rests (m_{E}).

6. Prozessanordnung nach Anspruch 3, **dadurch gekennzeichnet, dass** die Faseranteile im Endbeschnitt-Rest (m_{E}) und im Assemblierbeschnitt-Rest (m_{A}) identisch sind, und dass der Faseranteil im Randbeschnitt-Rest (m_{R}) im Vergleich zum End- oder Assemblierbeschnitt-Rest (m_{E}, m_{A}) reduziert ist, und dass in Abhängigkeit vom erforderlichen Faservolumengehalt des Recyclats (R) dem in die Recyclingstation (VII) geführten Beschnitt-Rest ein polymerisiertes Matrixmaterial (mₘₐₜᵣᵢₓ) zusetzbar ist.

7. Prozessanordnung nach einem der vorhergehenden Ansprüche, **dadurch gekennzeichnet, dass** die Aufbearbeitungsstation (VIII) und/oder die Recyclingstation (VII) eine Zerkleinerungseinheit, insbesondere eine Schneidmühle, aufweist, in der die zu dem Recyclat (R) zusammenführbaren Beschnitt-Reste zerkleinerbar sind, und dass die Randbeschnitt-Reste (m_{R}) sowie Assemblierbeschnitt-Reste (m_{A}) bevorzugt vor der Schneidmühlenverarbeitung polymerisierbar sind.

8. Prozessanordnung nach Anspruch 7, **dadurch gekennzeichnet, dass** der Endbeschnitt-Rest (m_{E}) mit dem Assemblierbeschnitt-Rest (m_{A}) und/oder dem Randbeschnitt-Rest (m_{R}), jeweils vor oder nach der Schneidmühle in unterschiedlichen Gewichtsverhältnissen miteinander mischbar sind und anschließend der Recyclingstation (VII) zuführbar sind.

9. Verfahren zur Herstellung eines faserverstärkten Kunststoffbauteils (1) aus zumindest einem endlosfaserverstärkten textilen Faserhalbzeug (15) mit reaktivem thermoplastischem Matrixmaterial, wobei bei der Fertigung des Faserhalbzeugs (15) Beschnitt-Reste (m_{R}, m_{A}) anfallen, die aus einem Verbund aus Fasern und dem reaktiven thermoplastischen Matrixmaterial bestehen, **dadurch gekennzeichnet, dass** bei einer Nachbehandlung des fertiggestellten Kunststoffbauteils (1) Endbeschnitt-Reste (m_{E}) anfallen, die aus einem Verbund aus Fasern und polymerisiertem thermoplastischem Matrixmaterial bestehen und in einer Recyclingstation (VII) zu einem Recyclat (R) weiterberarbeitet werden, wobei die bei der Fertigung des Faserhalbzeugs (15) anfallenden Beschnitt-Reste (m_{R}, m_{A}) in einer Aufbereitungsstation (VIII) polymerisiert und anschließend der Recyclingstation (VII) zugeführt werden.

## Claims

1. Process arrangement for the production of a fiber-reinforced plastics component (1), with a manufacture and assembly unit (I, IV) for the provision of at least one continuous-fiber-reinforced semifinished textile fiber product (15) with reactive thermoplastic matrix material, and specifically with formation of trimming residues (m_{R}, m_{A}) made of a composite of fibers and of the reactive thermoplastic matrix material, with a press unit and/or thermoforming unit (V) in which the continuous-fiber-reinforced semifinished textile fiber product (15) with reactive thermoplastic matrix material is heated to a temperature above the polymerization temperature and at the same time can be pressed and/or thermoformed into the shape of the required plastics component (1), **characterized by** a finishing unit (VI) in which final trimming of the plastics component (1) takes place, specifically with formation of final-trimming residues (m_{E}) made of a composite of fibers and of the polymerized matrix material, and with a recycling unit (VII) in which the final-trimming residues (m_{E}) made of the composite of fibers and of the polymerized matrix material can be further processed to give a recyclate (R) for use in an injection-molding or press process, **where** associated with the recycling unit (VII) there is a preparatory unit (VIII) to which the trimming residues (m_{R}, m_{A}) made of the composite of fibers and of reactive thermoplastic matrix material can be delivered, the reactive thermoplastic matrix material can be polymerized in the preparatory unit (VIII), and the resultant composite made of fibers and of polymerized matrix material can be delivered to the recycling unit (VII).

2. Process arrangement according to Claim 1, **characterized in that** at least one continuous web made of a texture structure (7) can be preimpregnated with a liquid starting component (8) of the reactive thermoplastic matrix material in the manufacturing unit (I) in a continuous process, and there is a cutting unit (II) provided in which, after impregnation, edge-trimming takes place in which the resultant preimpregnated continuous structure (7) can be cut to size to give the continuous-fiber-reinforced semifinished textile fiber products (15) with reactive thermoplastic matrix material, and specifically with formation of an edge-trimming residue (m_{R}), composed of the composite of fibers and of reactive thermoplastic matrix material.

3. Process arrangement according to Claim 1, **characterized in that** in the assembly unit (IV) the continuous-fiber-reinforced semifinished textile fiber products (15) can be mutually superposed in layers to give a layer package (16) in a lay-up procedure and/or assembly trimming takes place in which the semifinished fiber product (15) can be trimmed to size in accordance with a final shape of the fiber-reinforced plastics component (1), and specifically with formation of an assembly-trimming residue (m_{A}) composed of the composite made of fibers and of reactive thermoplastic matrix material.

4. Process arrangement according to Claim 1, **characterized in that** the continuous-fiber-reinforced semifinished textile fiber product (15) has an exterior component edge (17) which is required for the press procedure and/or thermoforming procedure and which forms a projecting rim that can be removed from the plastics component (1) in the finishing unit (VI), and specifically with formation of the final-trimming residue (m_{E}).

5. Process arrangement according to Claim 1, **characterized in that** perforations, cutouts or the like can be incorporated into the plastics component (1) in the finishing unit (VI), and specifically with formation of the final-trimming residue (m_{E}).

6. Process arrangement according to Claim 3, **characterized in that** the fiber contents in the final-trimming residue (m_{E}) and in the assembly-trimming residue (m_{A}) are identical, and the fiber content in the edge-trimming residue (m_{R}) is lower than that in the final-trimming or assembly-trimming residue (m_{E}, m_{A}) and a polymerized matrix material (mₘₐₜᵣᵢₓ) can be added to the trimming residue passed into the recycling unit (VII) in accordance with the required fiber volume content of the recyclate (R).

7. Process arrangement according to any of the preceding claims, **characterized in that** the preparatory unit (VIII) and/or the recycling unit (VII) has/have a comminution unit, in particular a granulator, which can comminute the trimming residues that can be combined to give the recyclate (R), and the edge-trimming residues (m_{R}) and assembly-trimming residues (m_{A}) can preferably be polymerized before processing in the granulator.

8. Process arrangement according to Claim 7, **characterized in that** the final-trimming residue (m_{E}) can be mixed in various ratios by weight with the assembly-trimming residue (m_{A}) and/or the edge-trimming residue (m_{R}), in each case upstream or downstream of the granulator, and can then be delivered to the recycling unit (VII).

9. Process for the production of a fiber-reinforced plastics component (1) made of at least one continuous-fiber-reinforced semifinished textile fiber product (15) with reactive thermoplastic matrix material, where during the manufacture of the semifinished fiber product (15) trimming residues (m_{R}, m_{A}) arise, composed of a composite made of fibers and of the reactive thermoplastic matrix material, **characterized in that** during finishing of the finished plastics component (1) final-trimming residues (m_{E}) arise, composed of a composite of fibers and of polymerized thermoplastic matrix material, and are further processed in a recycling unit (VII) to give a recyclate (R), where the trimming residues (m_{R}, m_{A}) arising during the manufacture of the semifinished fiber product (15) are polymerized in a preparatory unit (VIII) and then are delivered to the recycling unit (VII).

## Revendications

1. Agencement de procédé pour la fabrication d'un composant en matière plastique renforcé par des fibres (1), comprenant une station de production et d'assemblage (I, IV) pour la préparation d'au moins un produit semi-fini fibreux textile renforcé par des fibres filaments (15) avec un matériau de matrice thermoplastique réactif, et ce avec formation de résidus de découpe (m_{R}, m_{A}) constitués par un composite de fibres et du matériau de matrice thermoplastique réactif, comprenant une station de compression et/ou d'emboutissage (V), dans laquelle le produit semi-fini fibreux textile renforcé par des fibres filaments (15) avec le matériau de matrice thermoplastique réactif est porté à une température supérieure à la température de polymérisation et peut simultanément être comprimé et/ou embouti sous la forme du composant en matière plastique à fabriquer (1), **caractérisé par** une station de traitement secondaire (VI), dans laquelle une découpe finale du composant en matière plastique (1) a lieu, et ce avec formation de résidus de découpe finale (m_{E}) constitués par un composite de fibres et du matériau de matrice polymérisé, et comprenant une station de recyclage (VII), dans laquelle les résidus de découpe finale (m_{E}) constitués par le composite de fibres et du matériau de matrice polymérisé peuvent être transformés en un produit recyclé (R) destiné à des utilisations dans un procédé de moulage par injection ou de compression, une station de conditionnement (VIII) étant attribuée à la station de recyclage (VII), dans laquelle les résidus de découpe (m_{R}, m_{A}) constitués par le composite de fibres et du matériau de matrice thermoplastique réactif peuvent être introduits, le matériau de matrice thermoplastique réactif pouvant être polymérisé dans la station de conditionnement (VIII), et le composite ainsi formé de fibres et du matériau de matrice polymérisé pouvant être introduit dans la station de recyclage (VII).

2. Agencement de procédé selon la revendication 1, **caractérisé en ce que,** dans un procédé continu, au moins une bande continue en une structure textile (7) peut être pré-imprégnée avec un composant initial liquide (8) du matériau de matrice thermoplastique réactif dans la station de production (I), et **en ce qu'**une station de découpe (II) est mise à disposition, dans laquelle une découpe des bords a lieu après l'imprégnation, lors de laquelle la structure continue pré-imprégnée formée (7) peut être mise sous la forme des produits semi-finis fibreux textiles renforcés par des fibres filaments (15) avec le matériau de matrice thermoplastique réactif, et ce avec formation d'un résidu de découpe des bords (m_{R}), qui est constitué par le composite de fibres et du matériau de matrice thermoplastique réactif.

3. Agencement de procédé selon la revendication 1, **caractérisé en ce que,** dans la station d'assemblage (IV), les produits semi-finis fibreux textiles renforcés par des fibres filaments (15) peuvent être stratifiés les uns sur les autres par un processus de pose pour former un paquet de couches (16), et/ou **en ce qu'**une découpe d'assemblage a lieu, lors de laquelle le produit semi-fini fibreux (15) peut être découpé selon un contour final du composant en matière plastique renforcé par des fibres (1), et ce avec formation d'un résidu de découpe d'assemblage (m_{A}), qui est constitué par le composite de fibres et du matériau de matrice thermoplastique réactif.

4. Agencement de procédé selon la revendication 1, **caractérisé en ce que** le produit semi-fini fibreux textile renforcé par des fibres filaments (15) est configuré avec un bord de composant extérieur (17) nécessaire pour le processus de compression et/ou d'emboutissage, qui forme un surplomb qui peut être éliminé du composant en matière plastique (1) dans la station de traitement secondaire (VI), et ce avec formation d'un résidu de découpe finale (m_{E}).

5. Agencement de procédé selon la revendication 1, **caractérisé en ce que** des percées, des cavités ou analogues peuvent être introduites dans le composant en matière plastique (1) dans la station de traitement secondaire (VI), et ce avec formation du résidu de découpe finale (m_{E}).

6. Agencement de procédé selon la revendication 3, **caractérisé en ce que** les proportions de fibres dans le résidu de découpe finale (m_{E}) et dans le résidu de découpe d'assemblage (m_{A}) sont identiques, et **en ce que** la proportion de fibres dans le résidu de découpe des bords (m_{R}) est réduite en comparaison du résidu de découpe finale ou d'assemblage (m_{E}, m_{A}), et **en ce qu'**un matériau de matrice polymérisé (m_{matrice}) peut être ajouté au résidu de découpe introduit dans la station de recyclage (VII) en fonction de la teneur volumique en fibres nécessaire du produit recyclé (R).

7. Agencement de procédé selon l'une quelconque des revendications précédentes, **caractérisé en ce que** la station de conditionnement (VIII) et/ou la station de recyclage (VII) comprennent une unité de broyage, notamment un broyeur à couteaux, dans laquelle les résidus de découpe qui peuvent être réunis pour former le produit recyclé (R) peuvent être broyés, et **en ce que** les résidus de découpe des bords (m_{R}) et les résidus de découpe d'assemblage (m_{A}) peuvent de préférence être polymérisés avant l'usinage par le broyeur à couteaux.

8. Agencement de procédé selon la revendication 7, **caractérisé en ce que** le résidu de découpe finale (m_{E}) peut être mélangé avec le résidu de découpe d'assemblage (m_{A}) et/ou le résidu de découpe des bords (m_{R}) en différents rapports en poids avant ou après le broyeur à couteaux, puis ceux-ci peuvent être introduits dans la station de recyclage (VII).

9. Procédé de fabrication d'un composant en matière plastique renforcé par des fibres (1) constitué par au moins un produit semi-fini fibreux textile renforcé par des fibres filaments (15) avec un matériau de matrice thermoplastique réactif, selon lequel des résidus de découpe (m_{R}, m_{A}) sont formés lors de la production du produit semi-fini fibreux (15), qui sont constitués par un composite de fibres et du matériau de matrice thermoplastique réactif, **caractérisé en ce que** des résidus de découpe finale (m_{E}) sont formés lors d'un traitement secondaire du composant en matière plastique fini (1), qui sont constitués par un composite de fibres et du matériau de matrice thermoplastique polymérisé, et qui sont transformés en un produit recyclé (R) dans une station de recyclage (VII), les résidus de découpe (m_{R}, m_{A}) formés lors de la production du produit semi-fini fibreux (15) étant polymérisés dans une station de conditionnement (VIII), puis introduits dans la station de recyclage (VII).
